# EUROPEAN PATENT SPECIFICATION

(11) **EP 3 778 167 B1**
(45) Date of publication and mention of the grant of the patent: **15.06.2022**
(21) Application number: 19778006.7
(22) Date of filing: 20.03.2019
(51) Int. Cl.: B29C 33/10, B29C 45/34, B29C 33/70, B29C 45/33, B29C 45/40, B29C 45/76

(54) **GAS VENT BLOCKAGE DETECTION DEVICE, MOLD SYSTEM, INJECTION MOLDING SYSTEM, AND GAS VENT BLOCKAGE DETECTION METHOD**
VORRICHTUNG ZUR ERKENNUNG EINES BLOCKIERTEN GASABZUGS, FORMSYSTEM, SPRITZGIESSSYSTEM UND VERFAHREN ZUR ERKENNUNG EINES BLOCKIERTEN GASABZUGS
DISPOSITIF DE DÉTECTION D'OBSTRUCTION D'ÉVENT DE GAZ, SYSTÈME DE MOULE, SYSTÈME DE MOULAGE PAR INJECTION ET PROCÉDÉ DE DÉTECTION D'OBSTRUCTION D'ÉVENT DE GAZ

(30) Priority: 27.03.2018 JP 2018060814
(43) Date of publication of application: 17.02.2021
(73) Proprietor: Sumitomo Heavy Industries, Ltd., Tokyo 141-6025 (JP)
(72) Inventor: NAMATAME, Akira, Yokosuka-shi, Kanagawa 237-8555 (JP); SHISHIDO, Yoshiko, Yokosuka-shi, Kanagawa 237-8555 (JP); KUDOU, Yuuki, Yokosuka-shi, Kanagawa 237-8555 (JP)
(74) Representative: Walcher, Armin
(86) International application number: PCT/JP2019/011708
(87) International publication number: WO 2019/188665

(56) References cited:
- JP-A- H 079 474
- JP-A- 2002 187 169
- JP-A- 2011 247 682
- JP-A- 2012 196 870

## Description

### Technical Field

The present invention relates to a gas vent clogging detection device, a mold system, an injection molding system, and a gas vent clogging detection method.

### Background Art

Supplying and filling a cavity space of a mold device with a molten resin by an injection device to manufacture a molded product having a desired shape has been performed from the past.

In order to supply and fill the cavity space of the mold device with the molten resin, it is necessary to exhaust the air in a cavity space to an external space.

Additionally, when the molten resin is supplied into the cavity space of the mold device, there is a case where a portion of the resin may be decomposed to generate a resin decomposition gas. When the resin decomposition gas stays in the cavity space, there is a concern that the resin decomposition gas may affect the filling of the molten resin into the cavity space. Therefore, it is necessary to exhaust the resin decomposition gas to the external space as well.

Thus, in order to exhaust the air present in the cavity space and the resin decomposition gas from the cavity space to the external space, a gas vent that allows the cavity space and the external space of the mold device to communicate with each other has been provided in the mold device from the past.

Also, various studies have been made on the design of a vent structure and a method of collecting the data required for the design so that the resin decomposition gas or the like generated in the cavity space can be appropriately exhausted from the gas vent. For example, Patent Document 1 discloses a method of measuring generated gas of a mold injection material. Patent Document 2 discloses a mold device including a pressure sensor located near a gas vent, and the sensor detects clogging of the gas vent when the pressure increases over a given threshold.

### Citation List

### Patent Literature

[PTL 1] Japanese Unexamined Patent Publication No. 7-40390
[PTL 2] Japanese Unexamined Patent Publication No. 2002-187169

### Summary of Invention

### Technical Problem

However, when the mold device is repeatedly used, there is a case where a solid resin decomposition product or the like may be deposited in the gas vent or the like, and the gas vent may be clogged, which makes it difficult to exhaust the air in the cavity space and the generated resin decomposition gas.

In this way, when the gas vent is clogged due to a solid resin decomposition product or the like, insufficient filling (poor filling) of the molding material may occur or the deposited solid resin decomposition product may adhere to the molded product of the resin, which may cause a decrease in yield. For this reason, there has been a demand for a gas vent detection device capable of detecting clogging of the gas vent so that the mold device can be cleaned at an appropriate timing.

The present invention has been made in view of the above problems, and an object of one aspect of the present invention is to provide a gas vent clogging detection device capable of detecting clogging of a gas vent.

### Solution to Problem

In one aspect of the present invention, provided is a gas vent clogging detection device including a resin decomposition gas concentration detection sensor that detects concentration of a resin decomposition gas of a resin supplied to a cavity space of the mold device, the resin decomposition gas being exhausted from a gas vent of a mold device; and
a determination unit that determines whether or not the gas vent of the mold device is clogged on the basis of the resin decomposition gas concentration detected by the resin decomposition gas concentration detection sensor.

### Advantageous Effects of Invention

According to one aspect of the present invention, it is possible to provide the gas vent clogging detection device capable of detecting clogging of the gas vent.

### Brief Description of Drawings

Fig. 1 is an explanatory diagram of a gas vent clogging detection device and a mold system according to an embodiment of the present invention.
Fig. 2 is an enlarged view of region A in Fig. 1.
Fig. 3 is an explanatory diagram of a relationship between the number of shots and resin decomposition gas concentration.
Fig. 4 is an explanatory diagram of the relationship between the number of shots and the maximum value of the resin decomposition gas concentration in each shot.
Fig. 5 is a flow chart of a gas vent clogging detection method according to an embodiment of the present invention.
Fig. 6 is a view illustrating a state at the time of completion of mold opening of an injection molding system according to an embodiment of the present invention.
Fig. 7 is a view illustrating a state at the time of mold clamping of the injection molding system according to the embodiment of the present invention.

### Description of embodiments

Hereinafter, a gas vent clogging detection device, a mold system, an injection molding system, and a gas vent clogging detection method according to an embodiment will be described with reference to the attached drawings. In addition, in the present specification and the drawings, there is a case where substantially the same constituent elements may be designated by the same reference numerals to omit duplicate descriptions.

### [Gas vent clogging detection device]

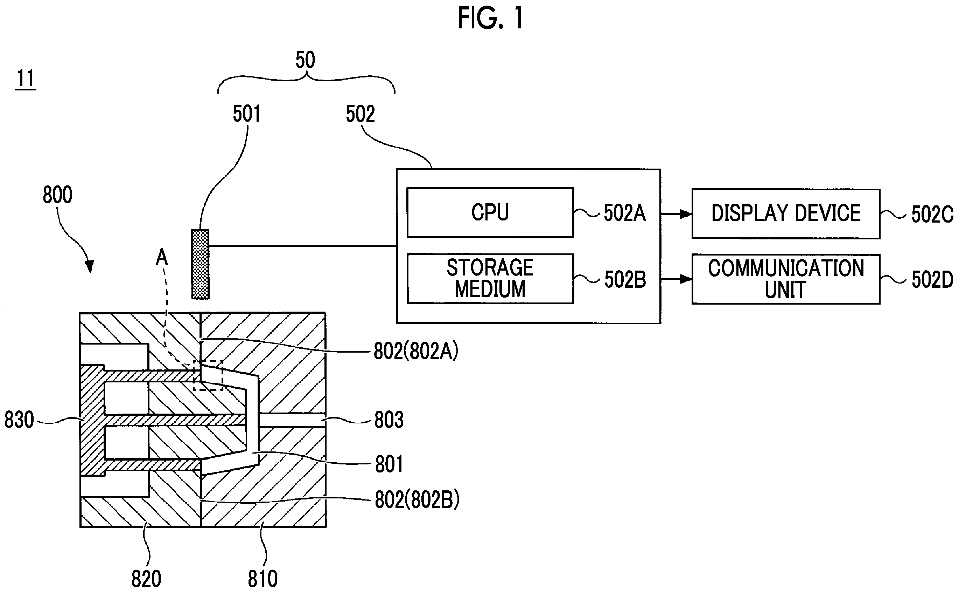

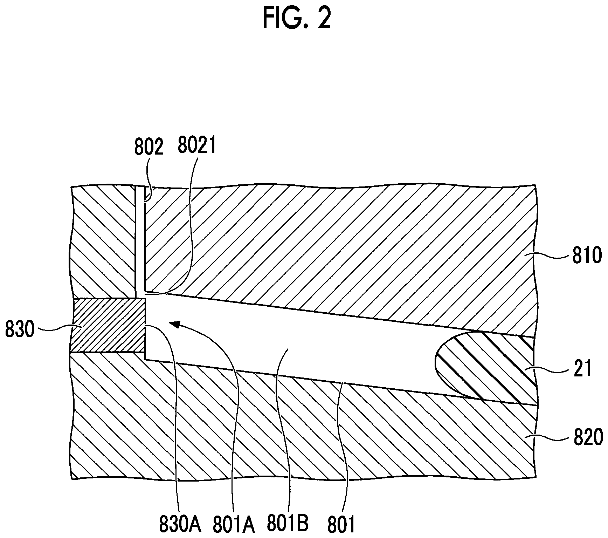

Here, a configuration example of the gas vent clogging detection device of the present embodiment will be described with reference to Figs. 1 and 2. Fig. 1 is a view schematically illustrating a cross-cross-sectional view of a gas vent clogging detection device 50 and a mold device 800 to which the gas vent clogging detection device is applied in a plane passing through a cavity space 801 and a gas vent 802. Additionally, Fig. 2 is an enlarged view schematically illustrating region A illustrated by the dotted line in Fig. 1.

A configuration example of the mold device 800 to which the gas vent clogging detection device of the present embodiment is applied will be described.

As illustrated in Figs. 1 and 2, the mold device 800 can have a stationary mold 810, a movable mold 820, and a movable member 830. The stationary mold 810 is fixed, and the movable mold 820 can be moved, for example, in the left-right direction in Fig. 1 and is configured so that the distance between the movable mold 820 and the stationary mold 810 can be changed. The movable member 830 can move in the left-right direction in Fig. 1, and the movable member 830 can fill the inside of the cavity space 801 and can press and eject the obtained molded product so as to take out the molded product from the mold device 800.

Figs. 1 and 2 illustrate a state in which the stationary mold 810 and the movable mold 820 are in touch with each other and are clamped. In the clamped state, the cavity space 801, which is a space for filling resin as a molding material, is formed between the stationary mold 810 and the movable mold 820. By supplying molten resin, which is the molding material, from a molding material introduction port 803 communicating with the cavity space 801 by an injection device, the resin can be filled in the cavity space 801.

As illustrated in Fig. 2, the resin 21, which is the molding material supplied into the cavity space 801, is filled from the resin introduction port toward an end portion 801A of the cavity space 801.

However, air remains in the cavity space 801. Additionally, when the molten resin is supplied into the cavity space 801, there is a case where a portion of the resin may be decomposed to generate a resin decomposition gas. Then, when the air or the resin decomposition gas stays in the cavity space 801, the resin 21 cannot reach the end portion 801A of the cavity space 801, and there is a concern that the underfilling of the resin occurs.

For this reason, the gas vent 802 that allows the cavity space 801 and an external space of the mold device 800 to communicate with each other can be provided. The number of gas vents 802 is not particularly limited, and for example, one gas vent 802 may be provided for one cavity space 801 or a plurality of gas vents 802 may be provided for one cavity space 801.

The gas vent 802 can be constituted of, for example, a groove (grooves) formed on any one or both of a surface of the stationary mold 810 facing the movable mold 820 and a surface of the movable mold 820 facing the stationary mold 810. Fig. 2 illustrates an example in which a groove is formed in the movable mold 820 to form the gas vent 802.

Additionally, a gas vent may be formed by providing a slit on a surface 830A of the movable member 830 facing the cavity space and forming the inside of the movable member 830 into a hollow structure.

By providing the gas vent 802, when the molten resin is supplied into the cavity space 801, the air in the cavity space 801 and the resin decomposition gas generated by the decomposition of the resin can be exhausted from the inside of the cavity space 801 to the external space. For this reason, the occurrence of the underfilling of the resin to the cavity space 801 can be suppressed.

However, when the filling of the resin into the cavity space 801 is repeatedly carried out a plurality of times, there is a case where a resin decomposition product that is a solid may be deposited inside the gas vent 802. Additionally, depending on the degree of deposition, there is a case where the solid resin decomposition product may adhere to the vicinity of an opening 8021 of the gas vent 802 on the cavity space 801 side. When the resin decomposition product is deposited inside the gas vent 802 or in the vicinity of the opening 8021 of the gas vent 802 in this way, there is a case where the gas vent 802 may be clogged and underfilling of the resin to the cavity space 801 may occur. Additionally, there is a case where the deposited resin decomposition product may fill the cavity space 801 and adhere to the surface of the manufactured molded product, which may impair the appearance. In this way, when the underfilling of the resin or the adhesion of the deposited resin decomposition product to the surface of the molded product occurs, it is necessary to exclude the molded product as a defective product depending on the degree of the underfilling or adhesion, which causes a decrease in yield.

For this reason, there has been a demand for a gas vent clogging detection device capable of detecting clogging of the gas vent 802 so that the mold device 800 can be cleaned and the decrease in yield can be suppressed before the gas vent 802 is clogged.

Thus, as a result of studies by the inventors of the present invention, when the solid resin decomposition product is deposited on the gas vent 802 and a portion of the gas vent 802 is blocked, it has been found that the concentration of the resin decomposition gas discharged from the gas vent 802 changes depending on the degree of the blocking. Then, the inventors have been found that the clogging of the gas vent can be detected by monitoring the concentration of the resin decomposition gas discharged from the gas vent, and has completed the present invention.

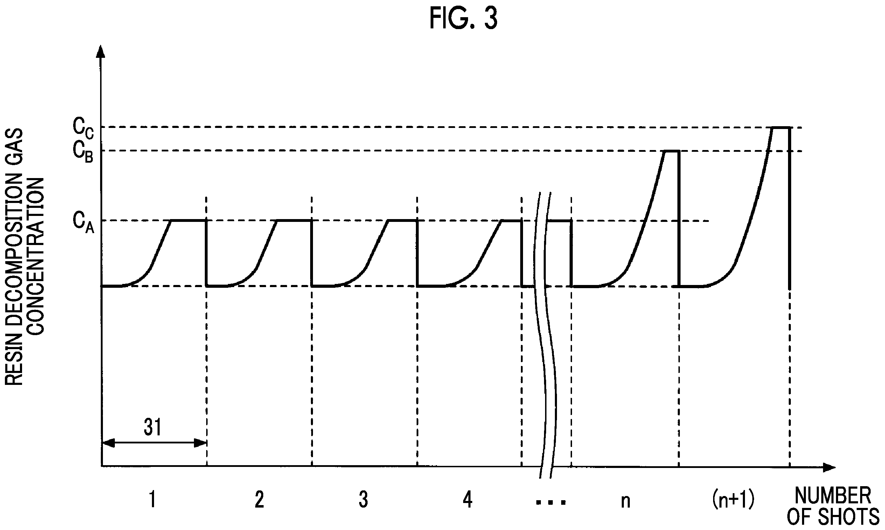

Fig. 3 illustrates a relationship between the number of shots and changes in the concentration of the resin decomposition gas discharged from the gas vent 802 while the cavity space 801 is filled with the resin in each shot. In addition, the number of shots corresponds to the number of times by which molded products are manufactured by filling the cavity space 801 of the mold device 800 with resin after cleaning the mold device 800.

Fig. 3 illustrates a change in the concentration of the resin decomposition gas exhausted from the gas vent from the time when the molten resin is injected and the filling of the resin into the cavity space is started to the time when the filling is completed, in each shot. For example, a period 31 illustrates a change in the concentration of the resin decomposition gas exhausted from the gas vent while the first filling of the resin into the mold device is performed after the completion of cleaning, that is, while the resin filling of the first shot is performed. In the period 31, the air initially accumulated in the cavity space of the mold device is exhausted together from the gas vent. Therefore, the resin decomposition gas concentration in the gas exhausted from the gas vent gradually increases and reaches a certain concentration C_{A}. In the subsequent several shots, changes in the resin decomposition gas concentration in the gas exhausted from the gas vent while the resin filling is performed show almost the same behavior.

However, in a case where the number of shots is repeated without cleaning the mold device, the resin decomposition product is deposited in the gas vent or the like, and a portion of the gas vent begins to be blocked, when the resin 21 reaches the vicinity of the end portion 801A of the cavity space 801 in Fig. 2, the pressure in the space 801B not filled with the resin 21 increases. Then, since the adiabatic compression occurs, the temperature of the space 801B not filled with the resin 21 rises, and the decomposition of the resin 21 is promoted. For this reason, in the nth shot illustrated in Fig. 3, the concentration of the resin decomposition gas exhausted from the gas vent while the resin filling is performed reaches a concentration C_{B} higher than the initial concentration C_{A}. Additionally, in the (n+1)th shot in which the clogging of the gas vent has progressed more than in the nth shot, the maximum value of the concentration of the resin decomposition gas exhausted from the gas vent while the resin filling is performed becomes higher and reaches the concentration Cc.

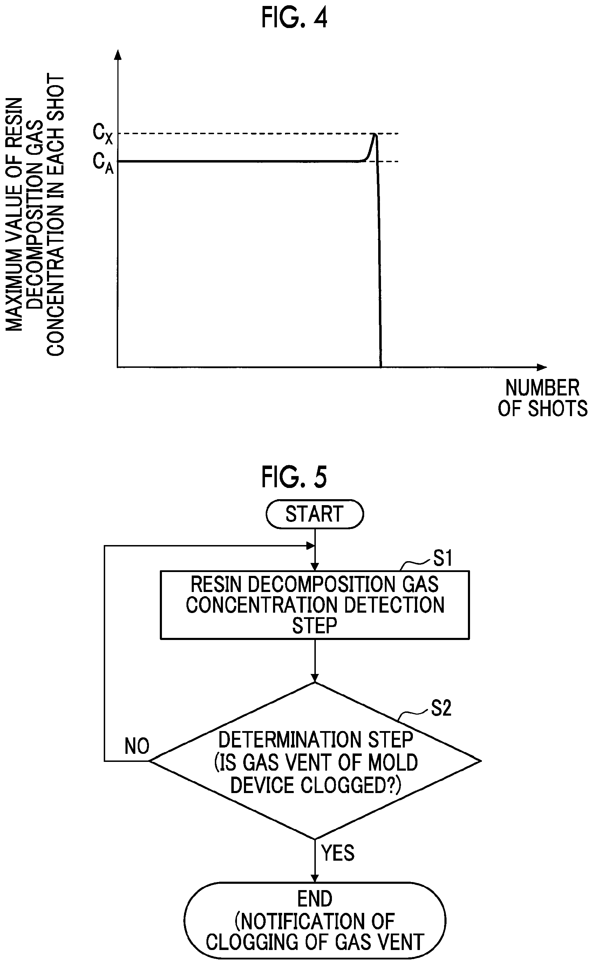

Here, Fig. 4 illustrates a relationship between the number of shots and the maximum value of the concentration of the resin decomposition gas exhausted from the gas vent while the resin filling is performed in each shot. As described so far, in the first shot in which the mold device immediately after cleaning is used and the mold device is filled with resin, the maximum value of the concentration of the resin decomposition gas exhausted from the gas vent while the resin filling is performed is, for example, C_{A}. Then, even when the number of shots is repeated, the maximum value of the resin decomposition gas concentration in each shot remains constant at C_{A} for a while.

However, when a portion of the gas vent starts to be blocked, the maximum value of the concentration of the resin decomposition gas exhausted from the gas vent during resin filling in each shot becomes higher than that of C_{A}. Then, the maximum value of the resin decomposition gas concentration in one shot immediately before the gas vent is completely clogged increases up to Cx.

In this manner, the maximum value of the concentration of the resin decomposition gas exhausted from the gas vent changes while the resin filling is performed in each shot, depending on such a degree that the gas vent is blocked. For this reason, the concentration of the resin decomposition gas exhausted from the gas vent can be detected, and whether or not the gas vent is clogged can be determined on the basis of the detected concentration of the resin decomposition gas, specifically, for example, on the basis of the maximum value of the concentration of the resin decomposition gas exhausted from the gas vent while the resin filling is performed in each shot.

Thus, for example, as illustrated in Fig. 1, the gas vent clogging detection device 50 of the present embodiment can have a resin decomposition gas concentration detection sensor 501 and a determination unit 502.

The resin decomposition gas concentration detection sensor 501 can detect the concentration of the resin decomposition gas of the resin that is exhausted from the gas vent 802 of the mold device 800 and supplied to the cavity space 801 of the mold device 800.

Additionally, the determination unit 502 can determine whether or not the gas vent 802 of the mold device 800 is clogged on the basis of the resin decomposition gas concentration detected by the resin decomposition gas concentration detection sensor 501.

As the resin decomposition gas concentration detection sensor 501, a sensor capable of detecting the concentration of the resin decomposition gas of the resin that is exhausted from the gas vent 802 and supplied to the cavity space 801 of the mold device 800 can be used.

For this reason, the type of the resin decomposition gas concentration detection sensor 501 is not particularly limited and can be selected depending on the type of resin to be used, the conditions at the time of injection molding, and the like.

For example, the following combinations can be considered as the types of the resin to be used, the resin decomposition gas expected to be generated, and the resin decomposition gas concentration detection sensor that can be preferably used.

As the resin decomposition gas concentration detection sensor, a VOC sensor can be generated because 4-phenoxyphenol and 1,4-diphenoxybenzene are generated in the case of polyetheretherketone (PEEK), the VOC sensor can be used because O-cresol, 2,6-xylenol, and 2,4-Xylenol are generated in the case of polyphenylenetel (PPE), the VOC sensor and a hydrogen sulfide sensor can be used because benzene thiol, diphenyl disulfide, phenyl sulfide, and hydrogen sulfide are generated in the case of polyphenylene sulfide (PPS), an ammonia sensor, a carbon dioxide sensor, or the VOC sensor are used Since ammonia, carbon dioxide, or cyclopentanone is generated in the case of polyamide 66 (PA66), the VOC sensor can be used because ε-caprolactum is generated in the case of polyamide 6 (PA6), the carbon dioxide sensor or the VOC sensor can be used because carbon dioxide (CO₂) or phenol are generated in the case of polycarbonate (PC), the VOC sensor can be used because benzene, phenol, biphenyl, or phenyl benzoate is generated in the case of a liquid crystal polymer (LCP), the carbon dioxide sensors or the VOC sensor can be used because carbon dioxide, 1,3-butadiene, tetrahydrofuran, or benzene is generated in the case of polybutylene terephthalate (PBT), the carbon dioxide sensor, a combustible gas sensor, or the VOC sensor can be used because carbon dioxide, ethylene, methane, acetaldehyde, or benzene is generated in the case of polyethylene terephthalate (PET), the VOC sensor can be used because formaldehyde is generated in the case of polyoxymethylene (POM), the combustible gas sensor or the VOC sensor can be used because saturated hydrocarbon with carbon atoms of 2 or more and unsaturated hydrocarbon with carbon atoms of 2 or more carbon atoms are generated in the case of polyethylene (PE) and polypropylene (PP), the VOC sensor can be used because methyl methacrylate is generated in the case of polymethyl methacrylate (PMMA), the VOC sensor can be used because styrene is generated in the case of polystyrene (PS), and a hydrogen chloride sensor can be used because hydrogen chloride is generated in the case of polyvinyl chloride (PVC).

The determination unit 502 is, for example, a kind of computer, and can have a central processing unit (CPU) 502A and a storage medium 502B. In addition, examples of the storage medium 502B include a random access memory (RAM), a read-only memory (ROM), a non-volatile RAM (NVRAM), a hard disk drive (HDD), and the like. Additionally, the determination unit 502 may be connected to a display device 502C for displaying a determination result, a communication unit 502D such as a network interface for outputting the determination result to the outside, and the like.

The determination unit 502 can be connected to the resin decomposition gas concentration detection sensor 501 and can acquire the resin decomposition gas concentration detected by the resin decomposition gas concentration detection sensor 501. Then, in the CPU 502A, the maximum value of the resin decomposition gas concentration exhausted from the gas vent 802 from the start of filling of the resin into the cavity space to the completion of the filling and the threshold value of the maximum value of the resin decomposition gas concentration that is set and stored in advance in the storage medium 502B can be compared with each other.

In this case, in a case where the acquired maximum value of the resin decomposition gas concentration exhausted from the gas vent from the start of filling of the resin the cavity space to the completion of the filling does not exceed the threshold value of the resin decomposition gas concentration, it can be determined that the gas vent is not clogged. For this reason, the effect that the molding can continue being carried out without cleaning the mold device may be displayed on the display device 502C or output to the injection molding system or the like via the communication unit 502D.

Additionally, in a case where the acquired maximum value of the resin decomposition gas concentration exhausted from the gas vent between the start of filling of the resin into the cavity space and the completion of the filling exceeds the threshold value of the maximum value of the resin decomposition gas concentration, it can be determined that the gas vent is clogged. For this reason, the effect that the next shot is stopped and the mold device is cleaned may be displayed as a warning on the display device 502C or output to the injection molding system or the like via the communication unit 502D.

The method of determining the threshold value of the maximum value of the resin decomposition gas concentration is not particularly limited and can be selected depending on, for example, the specifications required for the molded product. For this reason, for example, a preliminary test can be carried out, and the changes in the maximum value of the concentration of the resin decomposition gas exhausted from the gas vent from the start of filling of the resin into the cavity space to the completion of the filling in each shot until a molded product that does not satisfy the specifications is generated can be measured. That is, the graph as illustrated in Fig. 4 can be acquired. Then, for example, the maximum value of the resin decomposition gas concentration in the shot before the generation of the molded product that does not satisfy the specifications can be set as the threshold value.

According to the gas vent clogging detection device of the present embodiment described above, the clogging of the gas vent can be easily detected by using the resin decomposition gas concentration to which an attention has not been paid in the past. For this reason, by using the gas vent clogging detection device, it is possible to easily detect the clogging of the gas vent of the mold device, and it is possible to increase the yield of the molded product.

### [Gas vent clogging detection method]

The gas vent clogging detection method of the present embodiment can have the following steps.

A resin decomposition gas concentration detection step of detecting the concentration of the resin decomposition gas of the resin that is exhausted from the gas vent of the mold device and supplied to the cavity space of the mold device. A determination step of determining whether or not the gas vent of the mold device is clogged on the basis of the resin decomposition gas concentration detected in the resin decomposition gas concentration detection step.

In addition, the gas vent clogging detection method of the present embodiment can be carried out by using the already-described gas vent clogging detection device. For this reason, some of the matters already described will be omitted.

As already described, according to the study by the inventors of the present invention, the maximum value of the concentration of the resin decomposition gas exhausted from the gas vent while the resin filling is performed in each shot changes depending on such a degree that the gas vent is blocked. For this reason, the concentration of the resin decomposition gas exhausted from the gas vent can be detected, and whether or not the gas vent is clogged can be determined on the basis of the detected concentration of the resin decomposition gas, specifically, for example, on the basis of the maximum value of the concentration of the resin decomposition gas exhausted from the gas vent while the resin filling is performed in each shot.

Thus, in the gas vent clogging detection method of the present embodiment, as illustrated in the flowchart of Fig. 5, first, the resin decomposition gas concentration detection step S1 can be carried out. In the resin decomposition gas concentration detection step S1, the concentration of the resin decomposition gas of the resin that is exhausted from the gas vent of the mold device and supplied to the cavity space of the mold device can be detected. Specifically, it is possible to detect changes in the concentration of the resin decomposition gas exhausted from the gas vent while the cavity space of the mold device is filled with the resin.

Next, in the gas vent clogging detection method of the present embodiment, the determination step S2 can be carried out as illustrated in Fig. 5. In the determination step S2, whether or not the gas vent of the mold device is clogged can be determined on the basis of the resin decomposition gas concentration during one shot detected in the resin decomposition gas concentration detection step S1.

Specifically, for example, in the determination step S2, it can be determined whether or not the maximum value of the resin decomposition gas concentration detected in the resin decomposition gas concentration detection step S1 from the start of filling of the resin into the cavity space to the completion of the filling is the threshold value exceeds.

Then, in a case where it is determined that the maximum value of the resin decomposition gas concentration from the start of filling of the resin into the cavity space to the completion of the filling does not exceed the threshold value, it can be determined that the gas vent is not clogged. In this case, after the molded product is taken out from the mold device, the cavity space of the mold device can continue being filled with the resin again. In that case, the process proceeds to No in the flowchart of Fig. 5, and the resin decomposition gas concentration detection step S1 and the determination step S2 can be carried out again.

Additionally, in the determination step S2, in a case where it is determined that the maximum value of the resin decomposition gas concentration from the start of filling of the resin into the cavity space to the completion of the filling exceeds the threshold value, it can be determined that the gas vent of the mold device is clogged. In this case, it is possible to proceed to Yes in the flowchart of Fig. 5 and end the flow of the gas vent clogging detection method. Then, for example, a display device or the like can provide a notification of the clogging of the gas vent.

In a case where the notification of the clogging of the gas vent is provided, for example, the mold device can be cleaned to remove the blocking of the gas vent, and then the filling of the resin into the cavity space of the mold device can be resumed and repeatedly carried out. In this case, the gas vent clogging detection method may be resumed together.

According to the gas vent clogging detection method of the present embodiment described above, the blocking of the gas vent can be easily detected by measuring the concentration of the resin decomposition gas exhausted from the gas vent. For this reason, by using the gas vent clogging detection method, it is possible to easily detect the blocking of the gas vent of the mold device, and it is possible to increase the yield of the molded product.

### [Mold system]

The mold system of the present embodiment can have the already-described gas vent clogging detection device and the mold device.

As illustrated in Fig. 1, the mold system 11 of the present embodiment can have the already described gas vent clogging detection device 50 and the mold device 800.

Since the gas vent clogging detection device 50 and the mold device 800 have been already described, the description thereof will be omitted here.

In the mold system 11 of the present embodiment, as illustrated in Fig. 1, the resin decomposition gas concentration detection sensor 501 of the gas vent clogging detection device 50 can be disposed such that a detection unit faces an opening, that is, an outlet of the gas vent 802 located on an outer surface of the mold device 800. By adopting this disposition, the concentration of the resin decomposition gas exhausted from the gas vent 802 can be accurately measured. The attachment position of the resin decomposition gas concentration detection sensor 501 is optional. However, the attachment of the resin decomposition gas concentration detection sensor to fixed-side members such as the stationary mold 810 is more preferable in terms of handling or the like of wiring lines than the attachment of the resin decomposition gas concentration detection sensor to movable-side members such as the movable mold 820.

In addition, a pipe may be connected to the gas vent 802 and connect the resin decomposition gas concentration detection sensor 501 and the gas vent 802 via the pipe. However, when the mold device 800 is opened, for example, the position of the movable mold 820 moves in the left direction in the drawing. Therefore, there is a case where it may be difficult to connect the gas vent 802 and the pipe to each other. For this reason, by disposing the opening provided on the outer surface of the mold device 800 of the gas vent 802 and the detection unit of the resin decomposition gas concentration detection sensor 501 so as to face each other as described above, it is preferable to adopt such a configuration that the detection of the resin decomposition gas concentration is performed.

Additionally, in a case where a slit is formed in a surface 830A (see Fig. 2) of the movable member 830 facing the cavity space and the movable member 830 has a hollow structure to form a gas vent, the resin decomposition gas concentration detection sensor can be disposed in the movable member 830.

The mold device 800 can be provided with a plurality of the gas vents 802. The resin decomposition gas concentration detection sensor 501 may be disposed to correspond to any of the gas vents 802, and the disposition thereof is not particularly limited. For this reason, Fig. 1 illustrates an example in which the resin decomposition gas concentration detection sensor 501 is disposed so as to face an outlet of the gas vent 802A provided so as to communicate with an upper surface of the mold device 800. However, the present invention is limited to this form. For example, in Fig. 1, the resin decomposition gas concentration detection sensor may be disposed so as to face the outlet of the gas vent 802B provided so as to communicate with a lower surface of the mold device 800.

According to the mold system of the present embodiment described above, the already-described gas vent clogging detection device is provided. For this reason, the clogging of the gas vent of the mold device can be easily detected, and the yield of the molded product using the mold system can be increased.

### [Injection molding system]

The injection molding system 60 of the present embodiment can have the already-described gas vent clogging detection device 50 and an injection molding machine 10.

Here, the injection molding machine will be described.

### (Injection molding machine)

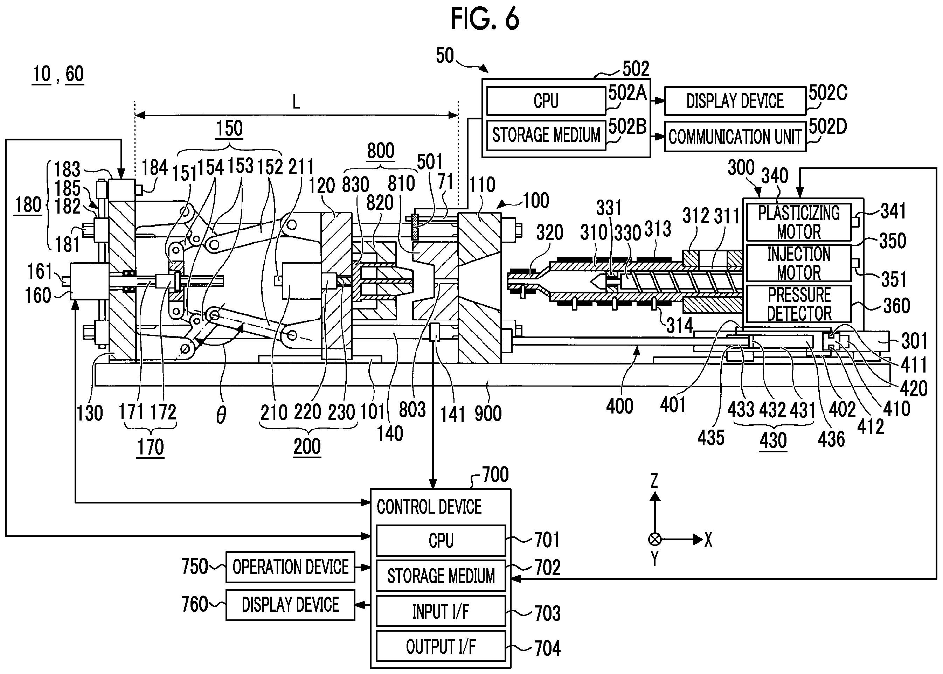

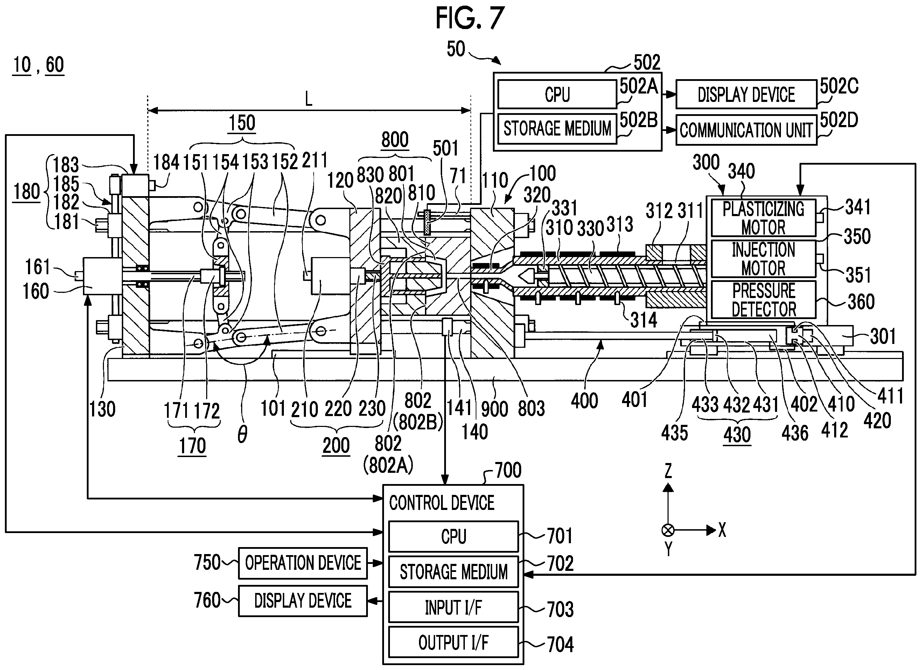

Fig. 6 is a view illustrating a state at the time of completion of the mold opening of the injection molding machine according to one embodiment. Fig. 7 is a view illustrating a state at the time of mold clamping of the injection molding machine according to one embodiment. In Figs. 6 and 7, an X direction, a Y direction, and a Z direction are perpendicular to each other. The X direction and the Y direction represent a horizontal direction, and the Z direction represents a vertical direction. In a case where the mold clamping device 100 is of a horizontal type, the X direction is mold opening and closing directions, and the Y direction is a width direction of the injection molding machine 10. As illustrated in Figs. 6 and 7, the injection molding machine 10 has a mold clamping device 100, an ejector device 200, an injection device 300, a moving device 400, a control device 700, and a frame 900. Hereinafter, respective constituent elements of the injection molding machine 10 will be described.

### (Mold clamping device)

In the description of the mold clamping device 100, the movement direction (the right direction in Figs. 6 and 7) of a movable platen 120 at the time of mold closing will be described as the front, and the movement direction (the left direction in Figs. 6 and 7) of the movable platen 120 at the time of mold opening will be described as the rear.

The mold clamping device 100 performs the mold closing, the mold clamping, and the mold opening of the mold device 800. The mold clamping device 100 is of, for example, a horizontal type, and the mold opening and closing directions are the horizontal direction. The mold clamping device 100 includes a stationary platen 110, a movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. The stationary mold 810 is attached to the surface of the stationary platen 110 facing the movable platen 120.

The movable platen 120 is movable in the mold opening and closing directions with respect to the frame 900. A guide 101 for guiding the movable platen 120 is laid on the frame 900. The movable mold 820 is attached to the surface of the movable platen 120 facing the stationary platen 110.

By moving the movable platen 120 forward and backward with respect to the stationary platen 110, the mold closing, the mold clamping, and the mold opening are performed. The mold device 800 is constituted of the stationary mold 810 and the movable mold 820. In addition, the mold device 800 may further include a movable member 830 or the like as an incidental facility as already described.

The toggle support 130 is coupled to the stationary platen 110 at a distance therefrom and is placed on the frame 900 so as to be movable in the mold opening and closing directions. In addition, the toggle support 130 may be movable along the guide laid on the frame 900. The guide of the toggle support 130 may be the same as that of the guide 101 of the movable platen 120.

In addition, in the present embodiment, the stationary platen 110 is fixed to the frame 900 and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The tie bar 140 couple the stationary platen 110 and the toggle support 130 to each other at a distance L in the mold opening and closing directions. A plurality of (for example, four) the tie bars 140 may be used. Each tie bar 140 is parallel to the mold opening and closing directions and extends according to a mold clamping force . At least one tie bar 140 may be provided with a tie bar strain detector 141 that detects the strain of the tie bar 140. The tie bar strain detector 141 sends a signal indicating the detection result to the control device 700. The detection result of the tie bar strain detector 141 is used for detecting a mold clamping force.

In addition, in the present embodiment, the tie bar strain detector 141 is used as the mold clamping force detector that detects the mold clamping force. However, the present invention is not limited to this. The mold clamping force detector is not limited to the strain gauge type and may be a piezoelectric type, a capacitive type, a hydraulic type, an electromagnetic type, or the like, and the attachment position thereof is not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 is constituted of a crosshead 151, a pair of link groups, and the like. Each link group has a first link 152 and a second link 153 that are bendably and stretchably coupled to each other by a pin or the like. The first link 152 is oscillatingly attached to the movable platen 120 with a pin or the like, and the second link 153 is oscillatingly attached to the toggle support 130 with a pin or the like. The second link 153 is attached to the crosshead 151 via a third link 154.

When the crosshead 151 is moved forward and backward with respect to the toggle support 130, the first link 152 and the second link 153 bend and stretch, and the movable platen 120 moves forward and backward with respect to the toggle support 130.

In addition, the configuration of the toggle mechanism 150 is not limited to the configuration illustrated in Figs. 6 and 7. For example, in Figs. 6 and 7, the number of nodes in each link group is 5 but may be 4, and one end portion of the third link 154 may be combined with the nodes of the first link 152 and the second link 153.

The mold clamping motor 160 is attached to the toggle support 130 and activates the toggle mechanism 150. The mold clamping motor 160 moves the crosshead 151 forward and backward with respect to the toggle support 130 to bend and stretch the first link 152 and the second link 153, and moves the movable platen 120 forward and backward with respect to the toggle support 130. The mold clamping motor 160 is directly coupled to the motion conversion mechanism 170 but may be coupled to the motion conversion mechanism 170 via a belt, a pulley, or the like.

The motion conversion mechanism 170 converts the rotary motion of the mold clamping motor 160 into a linear motion of the crosshead 151. The motion conversion mechanism 170 includes a screw shaft 171 and a screw nut 172 screwed onto the screw shaft 171. A ball or a roller may be interposed between the screw shaft 171 and the screw nut 172.

The mold clamping device 100 performs a mold closing step, a mold clamping step, a mold opening step, and the like under the control of the control device 700.

In the mold closing step, the mold clamping motor 160 is driven to move the crosshead 151 forward to a mold closing completion position at a set speed to move the movable platen 120 forward and bring the movable mold 820 in touch with the stationary mold 810. The position and speed of the crosshead 151 are detected by using, for example, a mold clamping motor encoder 161 or the like. The mold clamping motor encoder 161 detects the rotation of the mold clamping motor 160 and sends a signal indicating the detection result to the control device 700. In addition, a crosshead position detector that detects the position of the crosshead 151 and a crosshead speed detector that detects the speed of the crosshead 151 are not limited to the mold clamping motor encoder 161, and general ones can be used. Additionally, a movable platen position detector that detects the position of the movable platen 120 and a movable platen speed detector that detects the speed of the movable platen 120 are not limited to the mold clamping motor encoder 161, and general ones can be used.

In the mold clamping step, the mold clamping motor 160 is further driven to further move the crosshead 151 forward from the mold closing completion position to the mold clamping position to generate a mold clamping force. At the time of mold clamping, the cavity space 801 (see Fig. 7) is formed between the movable mold 820 and the stationary mold 810, and the injection device 300 fills the cavity space 801 with a liquid molding material via the molding material introduction port 803. A molded product is obtained by solidifying the filled molding material. The number of cavity spaces 801 may be plural. In that case, a plurality of molded products can be obtained at the same time.

In the mold opening step, the mold clamping motor 160 is driven to move the crosshead 151 backward to a mold opening completion position at a set speed to move the movable platen 120 backward and separate the movable mold 820 from the stationary mold 810. After that, the ejector device 200 ejects the molded product from the movable mold 820.

The setting conditions in the mold closing step and the mold clamping step are collectively set as a series of setting conditions. For example, the speed and position (including a mold closing start position, a speed switching position, the mold closing completion position, and the mold clamping position) of the crosshead 151 and the mold clamping force in the mold closing step and the mold clamping step are collectively set as a series of setting conditions. The mold closing start position, the speed switching position, the mold closing completion position, and the mold clamping position are arranged in this order from the rear side to the front side and represent a start point and an end point of a cross section in which the speed is set.

The speed is set for each cross section. The speed switching position may be one or plural. The speed switching position may not be set. Only any one of the mold clamping position and the mold clamping force may be set.

The setting conditions in the mold opening step are also set in the same manner. For example, the speed and position (including a mold opening start position, the speed switching position, and the mold opening completion position) of the crosshead 151 in the mold opening step are collectively set as a series of setting conditions. The mold opening start position, the speed switching position, and the mold opening completion position are arranged in this order from the front side to the rear side and represent the start point and the end point of the cross section in which the speed is set. The speed is set for each cross section. The speed switching position may be one or plural. The speed switching position may not be set. The mold opening start position and the mold clamping position may be the same position. Additionally, the mold opening completion position and the mold closing start position may be the same position.

In addition, the speed and position of the movable platen 120 may be set instead of the speed and position of the crosshead 151. Additionally, the mold clamping force may be set instead of the position (for example, the mold clamping position) of the crosshead or the position of the movable platen.

Meanwhile, the toggle mechanism 150 amplifies the driving force of the mold clamping motor 160 and transmits the driving force to the movable platen 120. The amplification factor is also referred to as a toggle factor. The toggle factor changes depending on an angle θ formed by the first link 152 and the second link 153 (hereinafter, also referred to as a "link angle θ"). The link angle θ is obtained from the position of the crosshead 151. When the link angle θ is 180°, the toggle factor becomes maximum.

In a case where the thickness of the mold device 800 has changed due to replacement of the mold device 800 or a temperature change of the mold device 800, the mold thickness is adjusted such that a predetermined mold clamping force is obtained at the time of mold clamping. In the mold thickness adjustment, for example, the distance L between the stationary platen 110 and the toggle support 130 is adjusted such that the link angle θ of the toggle mechanism 150 reaches a predetermined angle at the time of the mold touch when the movable mold 820 is in touch with the stationary mold 810.

The mold clamping device 100 has the mold space adjustment mechanism 180 that performs the mold thickness adjustment by adjusting the distance L between the stationary platen 110 and the toggle support 130. The mold space adjustment mechanism 180 has a screw shaft 181 formed at a rear end portion of the tie bar 140, a screw nut 182 rotatably held by the toggle support 130, and a mold thickness adjusting motor 183 that rotates a screw nut 182 screwed to the screw shaft 181.

The screw shaft 181 and the screw nut 182 are provided for each tie bar 140. The rotation of the mold thickness adjusting motor 183 may be transmitted to a plurality of the screw nuts 182 via a rotation transmission unit 185. The plurality of screw nuts 182 can be rotated in synchronization. In addition, it is also possible to individually rotate the plurality of screw nuts 182 by changing the transmission channel of the rotation transmission unit 185.

The rotation transmission unit 185 is constituted of, for example, a gear or the like. In this case, a driven gear is formed at the outer periphery of each screw nut 182, a drive gear is attached to an output shaft of the mold thickness adjusting motor 183, and an intermediate gear that meshes with a plurality of the driven gears and the drive gear are rotatably held at a central portion of the toggle support 130. In addition, the rotation transmission unit 185 may be constituted of a belt, a pulley, or the like instead of the gear.

The operation of the mold space adjustment mechanism 180 is controlled by the control device 700. The control device 700 drives the mold thickness adjusting motor 183 to rotate the screw nut 182, thereby adjusting the position of the toggle support 130, which rotatably holds the screw nut 182, with respect to the stationary platen 110, and adjusts the distance L between the stationary platen 110 and the toggle support 130.

In addition, in the present embodiment, the screw nut 182 is held to be rotatable with respect to the toggle support 130, and the tie bar 140 on which the screw shaft 181 is formed is fixed to the stationary platen 110. However, the present invention is not limited to this.

For example, the screw nut 182 may be held to be rotatable with respect to the stationary platen 110, and the tie bar 140 may be fixed to the toggle support 130. In this case, the distance L can be adjusted by rotating the screw nut 182.

Additionally, the screw nut 182 may be fixed to the toggle support 130, and the tie bar 140 may be held to be rotatable with respect to the stationary platen 110. In this case, the distance L can be adjusted by rotating the tie bar 140.

Moreover, the screw nut 182 may be fixed to the stationary platen 110 and the tie bar 140 may be held to be rotatable with respect to the toggle support 130.
In this case, the distance L can be adjusted by rotating the tie bar 140.

The distance L is detected by using a mold thickness adjusting motor encoder 184. The mold thickness adjusting motor encoder 184 detects the rotational amount and the rotational direction of the mold thickness adjusting motor 183, and sends a signal indicating the detection result to the control device 700. The detection result of the mold thickness adjusting motor encoder 184 is used for monitoring and controlling the position and distance L of the toggle support 130. In addition, a toggle support position detector that detects the position of the toggle support 130 and a distance detector that detects the distance L are not limited to the mold thickness adjusting motor encoder 184, and general ones can be used.

The mold space adjustment mechanism 180 adjusts the distance L by rotating one of the screw shaft 181 and the screw nut 182 that are screwed to each other. A plurality of the mold space adjustment mechanisms 180 may be used, or a plurality of the mold thickness adjusting motors 183 may be used.

In addition, the mold space adjustment mechanism 180 of the present embodiment has the screw shaft 181 formed on the tie bar 140 and the screw nut 182 screwed onto the screw shaft 181 in order to adjust the distance L. However, the present invention is not limited to this.

For example, the mold space adjustment mechanism 180 may have a tie bar temperature controller that regulates the temperature of the tie bar 140. The tie bar temperature controller is attached to each tie bar 140 and adjusts the temperature of the plurality of tie bars 140 in cooperation with each other. The higher the temperature of the tie bar 140, the longer the tie bar 140 is due to thermal expansion, and the larger the distance L is. The temperatures of the plurality of tie bars 140 may be adjusted independently.

The tie bar temperature controller includes a heating unit such as a heater, and regulates the temperature of the tie bar 140 by heating. The tie bar temperature controller may include a cooler such as a water cooling jacket, and regulate the temperature of the tie bar 140 by cooling. The tie bar temperature controller may include both the heating unit and the cooler.

In addition, the mold clamping device 100 of the present embodiment is of a horizontal type in which the mold opening and closing directions is the horizontal direction but may be of a vertical type in which the mold opening and closing directions is the up-down direction. The vertical type mold clamping device has a lower platen, an upper platen, the toggle support, the tie bar, the toggle mechanism, the mold clamping motor, and the like. Any one of the lower platen and the upper platen is used as the stationary platen, and the other one is used as the movable platen. A lower mold is attached to the lower platen, and an upper mold is attached to the upper platen. The lower mold and the upper mold constitute the mold device. The lower mold may be attached to the lower platen via a rotary table . The toggle support is disposed below the lower platen and is coupled to the upper platen via the tie bar. The tie bar couples the upper platen and the toggle support to each other at a distance in the mold opening and closing directions . The toggle mechanism is disposed between the toggle support and the lower platen to lift and lower the movable platen. The mold clamping motor activates the toggle mechanism. In a case where the mold clamping device is of the vertical type, the number of tie bars is usually three. In addition, the number of tie bars is not particularly limited.

In addition, the mold clamping device 100 of the present embodiment has the mold clamping motor 160 as a drive source but may have a hydraulic cylinder instead of the mold clamping motor 160. Additionally, the mold clamping device 100 may have a linear motor for mold opening and closing and an electromagnet for mold clamping.

### (Ejector device)

In the description of the ejector device 200, similarly to the description of the mold clamping device 100, the movement direction (the right direction in Figs. 6 and 7) of the movable platen 120 at the time of mold closing will be described as the front, and the movement direction (the left direction in Figs. 6 and 7) of the movable platen 120 at the time of mold opening will be described as the rear.

The ejector device 200 ejects a molded product from the mold device 800. The ejector device 200 has an ejector motor 210, a motion conversion mechanism 220, an ejector rod 230, and the like.

The ejector motor 210 is attached to the movable platen 120. The ejector motor 210 is directly coupled to the motion conversion mechanism 220 but may be coupled to the motion conversion mechanism 220 via a belt, a pulley, or the like.

The motion conversion mechanism 220 converts the rotary motion of the ejector motor 210 into the linear motion of the ejector rod 230. The motion conversion mechanism 220 includes a screw shaft and a screw nut screwed onto the screw shaft. A ball or a roller may be interposed between the screw shaft and the screw nut.

The ejector rod 230 is movable forward and backward in a through-hole of the movable platen 120. A front end portion of the ejector rod 230 comes into contact with the movable member 830 that is disposed inside the movable mold 820 so as to be movable forward and backward. The front end portion of the ejector rod 230 may or may not be coupled to the movable member 830.

The ejector device 200 performs an ejection step under the control of the control device 700.

In the ejection step, the ejector motor 210 is driven to move the ejector rod 230 forward from a standby position to an ejection position at a set speed, thereby moving the movable member 830 forward and ejecting the molded product. After that, the ejector motor 210 is driven to move the ejector rod 230 backward at a set speed and move the movable member 830 backward to the original standby position. The position and speed of the ejector rod 230 are detected by using, for example, an ejector motor encoder 211. The ejector motor encoder 211 detects the rotation of the ejector motor 210 and sends a signal indicating the detection result to the control device 700. In addition, an ejector rod position detector that detects the position of the ejector rod 230 and an ejector rod speed detector that detects the speed of the ejector rod 230 are not limited to the ejector motor encoder 211, and general ones can be used.

### (Injection device)

In the description of the injection device 300, unlike the description of the mold clamping device 100 and the description of the ejector device 200, the movement direction (the left direction in Figs. 6 and 7) of a screw 330 during filling will be described as the front and the movement direction (the right direction in Figs. 6 and 7) of the screw 330 during measuring be described as the rear.

The injection device 300 is installed on a slide base 301 that is movable forward and backward with respect to the frame 900 and is movable forward and backward with respect to the mold device 800. The injection device 300 is in touch with the mold device 800 and fills the cavity space 801 in the mold device 800 with the molding material. The injection device 300 includes, for example, a cylinder 310, a nozzle 320, a screw 330, a plasticizing motor 340, an injection motor 350, a pressure detector 360, and the like.

The cylinder 310 heats the molding material supplied from a feed port 311 to the inside thereof. A resin can be used as the molding material. The molding material is formed into, for example, a pellet shape and is supplied to the feed port 311 in a solid state. The feed port 311 is formed at a rear portion of the cylinder 310. A cooler 312 such as a water-cooled cylinder is provided at an outer periphery of the rear portion of the cylinder 310. A heating unit 313 such as a band heater and a temperature measurer 314 are provided at an outer periphery of the cylinder 310 in front of the cooler 312.

The cylinder 310 is divided into a plurality of zones in an axial direction of the cylinder 310 (left-right direction in Figs. 6 and 7). The heating unit 313 and the temperature measurer 314 are provided in each zone. For each zone, the control device 700 controls the heating unit 313 such that the detected temperature of the temperature measurer 314 reaches a set temperature.

The nozzle 320 is provided at a front end portion of the cylinder 310 and is pressed against the mold device 800. The heating unit 313 and the temperature measurer 314 are provided at an outer periphery of the nozzle 320. The control device 700 controls the heating unit 313 such that the detected temperature of the nozzle 320 reaches a set temperature.

The screw 330 is disposed in the cylinder 310 so as to be rotatable and movable forward and backward. When the screw 330 is rotated, the molding material is fed forward along a helical groove of the screw 330. The molding material is gradually melted by the heat from the cylinder 310 while being fed forward. As the liquid molding material is fed to the front of the screw 330 and accumulated at the front portion of the cylinder 310, the screw 330 is moved backward. Thereafter, when the screw 330 is moved forward, the liquid molding material accumulated in front of the screw 330 is injected from the nozzle 320 and filled in the mold device 800.

A backflow prevention ring 331 is attached to a front portion of the screw 330 so as to be movable forward and backward as a backflow prevention valve that prevents the backflow of the molding material from the front to the rear of the screw 330 when the screw 330 is pushed forward.

When the screw 330 is moved forward, the backflow prevention ring 331 is pushed backward by the pressure of the molding material in front of the screw 330 and is moved backward relative to the screw 330 up to a close position (see Fig. 7) where the flow path of the molding material is blocked. Accordingly, the molding material accumulated in the front of the screw 330 is prevented from flowing backward.

On the other hand, when the screw 330 is rotated, the backflow prevention ring 331 is pushed forward by the pressure of the molding material fed forward along the helical groove of the screw 330 and is moved forward relative to the screw 330 up to an open position where the flow path of the molding material is opened. (See Fig. 6). Accordingly, the molding material is fed to the front of the screw 330.

The backflow prevention ring 331 may be of either a co-rotation type in which the backflow prevention ring rotates together with the screw 330 or of a non-co-rotation type in which the backflow prevention ring does not rotate together with the screw 330.

In addition, the injection device 300 may have a drive source for moving the backflow prevention ring 331 forward and backward between the open position and the closed position with respect to the screw 330.

The plasticizing motor 340 rotates the screw 330. A drive source for rotating the screw 330 is not limited to the plasticizing motor 340 and may be, for example, a hydraulic pump.

The injection motor 350 moves the screw 330 forward and backward. A motion conversion mechanism or the like for converting the rotary motion of the injection motor 350 into the linear motion of the screw 330 is provided between the injection motor 350 and the screw 330. The motion conversion mechanism has, for example, a screw shaft and a screw nut screwed onto the screw shaft. A ball, a roller, or the like may be provided between the screw shaft and the screw nut. The drive source for moving the screw 330 forward and backward is not limited to the injection motor 350 and may be, for example, a hydraulic cylinder.

The pressure detector 360 detects the pressure transmitted between the injection motor 350 and the screw 330. The pressure detector 360 is provided in a force transmission channel between the injection motor 350 and the screw 330 to detect the pressure acting on the pressure detector 360.

The pressure detector 360 sends a signal indicating the detection result to the control device 700.
The detection result of the pressure detector 360 is used for controlling and monitoring the pressure received from the molding material by the screw 330, the back pressure on the screw 330, the pressure acting on the molding material from the screw 330, and the like.

The injection device 300 performs a plasticizing step, a filling step, a holding pressure step, and the like under the control of the control device 700.

In the plasticizing step, the plasticizing motor 340 is driven to rotate the screw 330 at a set rotating speed and feed the molding material forward along the helical groove of the screw 330.
Accordingly, the molding material is gradually melted. As the liquid molding material is fed to the front of the screw 330 and accumulated at the front portion of the cylinder 310, the screw 330 is moved backward. The rotating speed of the screw 330 is detected by using, for example, a plasticizing motor encoder 341. The plasticizing motor encoder 341 detects the rotation of the plasticizing motor 340 and sends a signal indicating the detection result to the control device 700.

In addition, the screw rotating speed detector that detects the rotating speed of the screw 330 is not limited to the plasticizing motor encoder 341, and a general screw can be used.

In the plasticizing step, the injection motor 350 may be driven to apply a set back pressure to the screw 330 in order to limit the sudden backward movement of the screw 330. The back pressure on the screw 330 is detected using, for example, the pressure detector 360. The pressure detector 360 sends a signal indicating the detection result to the control device 700. When the screw 330 moves backward to a measuring completion position and a predetermined amount of molding material is accumulated in front of the screw 330, the plasticizing step is completed.

In the filling step, the injection motor 350 is driven to move the screw 330 forward at a set speed, and the liquid molding material accumulated in front of the screw 330 is filled into the cavity space 801 in the mold device 800 via a molding material introduction port 803 The position and speed of the screw 330 are detected using, for example, an injection motor encoder 351. The injection motor encoder 351 detects the rotation of the injection motor 350 and sends a signal indicating the detection result to the control device 700. When the position of the screw 330 reaches a set position, switching from the filling step to the holding pressure step (so-called V/P switching) is performed. A position where the V/P switching is performed is also referred to as a V/P switching position. The set speed of the screw 330 may be changed depending on the position, time, and the like of the screw 330.

In addition, after the position of the screw 330 reaches the set position in the filling step, the screw 330 may be temporarily stopped at the set position, and then, the V/P switching may be performed. Immediately before the V/P switching, instead of stopping the screw 330, the screw 330 may be moved forward or backward at a slow speed. Additionally, a screw position detector for detecting the position of the screw 330 and a screw speed detector for detecting the speed of the screw 330 are not limited to the injection motor encoder 351, and general ones can be used.

In the holding pressure step, the injection motor 350 is driven to push the screw 330 forward, hold the pressure of the molding material (hereinafter, also referred to as "holding pressure") at a front end portion of the screw 330 at a set pressure, and push the molding material remaining in the cylinder 310 toward the mold device 800. The shortage of the molding material due to cooling shrinkage in the mold device 800 can be replenished. The holding pressure is detected using, for example, the pressure detector 360. The pressure detector 360 sends a signal indicating the detection result to the control device 700. A set value of the holding pressure may be changed depending on the elapsed time from the start of the holding pressure step.

In the holding pressure step, the molding material in the cavity space 801 in the mold device 800 is gradually cooled, and at the time of the completion of the holding pressure step, the inlet of the cavity space 801 is blocked with the solidified molding material. This state is referred to as a gate seal, and the backflow of the molding material from the cavity space 801 is prevented. After the holding pressure step, the cooling step is started. In the cooling step, the molding material in the cavity space 801 is solidified. The plasticizing step may be performed during the cooling step to shorten the molding cycle time.

In addition, the injection device 300 of the present embodiment is of an in-line screw type, but may be of a pre-plastic type or the like. The pre-plastic type injection device supplies the molding material melted in a plasticizing cylinder to the injection cylinder and injects the molding material from the injection cylinder into the mold device. A screw is disposed in the plasticizing cylinder to be rotatable or rotatable and movable forward and backward, and a plunger is disposed in an injection cylinder so as to be movable forward and backward.

Additionally, the injection device 300 of the present embodiment is of a horizontal type in which the axial direction of the cylinder 310 is the horizontal direction but may be a vertical type in which the axial direction of the cylinder 310 is the up-down direction. The mold clamping device combined with the vertical type injection device 300 may be of a vertical type or of a horizontal type. Similarly, the mold clamping device combined with the horizontal type injection device 300 may be of a horizontal type or a vertical type.

### (Moving device)

In the description of the moving device 400, similarly to the description of the injection device 300, the movement direction of the screw 330 during filling (the left direction in Figs. 6 and 7) will be described as the front, and the movement direction of the screw 330 during measuring (the right direction in Figs. 6 and 7) will be described as the rear.

The moving device 400 moves the injection device 300 forward and backward with respect to the mold device 800. Additionally, the moving device 400 presses the nozzle 320 against the mold device 800 to generate a nozzle touch pressure. The moving device 400 includes a hydraulic pump 410, a motor 420 as a drive source, a hydraulic cylinder 430 as a hydraulic actuator, and the like.

The hydraulic pump 410 has a first port 411 and a second port 412. The hydraulic pump 410 is a pump that is rotatable in both directions and switches the rotational direction of the motor 420 to suck a hydraulic fluid (for example, oil) from any one of the first port 411 and the second port 412 and discharge the hydraulic fluid from the other to generate hydraulic pressure. In addition, the hydraulic pump 410 may suck the hydraulic fluid from a tank and discharge the hydraulic fluid from any one of the first port 411 and the second port 412.

The motor 420 activates the hydraulic pump 410. The motor 420 drives the hydraulic pump 410 in the rotational direction and rotation torque according to a control signal from the control device 700. The motor 420 may be an electric motor or an electric servomotor.

The hydraulic cylinder 430 has a cylinder body 431, a piston 432, and a piston rod 433. The cylinder body 431 is fixed to the injection device 300. The piston 432 partitions the inside of the cylinder body 431 into a front chamber 435 as a first chamber and a rear chamber 436 as a second chamber. The piston rod 433 is fixed to the stationary platen 110.

The front chamber 435 of the hydraulic cylinder 430 is connected to the first port 411 of the hydraulic pump 410 via a first flow path 401. The hydraulic fluid discharged from the first port 411 is supplied to the front chamber 435 via the first flow path 401 to push the injection device 300 forward. The injection device 300 is moved forward and the nozzle 320 is pressed against the stationary mold 810. The front chamber 435 functions as a pressure chamber that generates the nozzle touch pressure of the nozzle 320 by the pressure of the hydraulic fluid supplied from the hydraulic pump 410.

On the other hand, the rear chamber 436 of the hydraulic cylinder 430 is connected to the second port 412 of the hydraulic pump 410 via a second flow path 402. The hydraulic fluid discharged from the second port 412 is supplied to the rear chamber 436 of the hydraulic cylinder 430 via the second flow path 402 to push the injection device 300 backward. The injection device 300 is moved backward and the nozzle 320 is separated from the stationary mold 810.

In addition, in the present embodiment, the moving device 400 includes a hydraulic cylinder 430, but the present invention is not limited thereto. For example, instead of the hydraulic cylinder 430, an electric motor and a motion conversion mechanism that converts the rotary motion of the electric motor into a linear motion of the injection device 300 may be used.

### (Control device)

The control device 700 is constituted of, for example, a computer, and has a central processing unit (CPU) 701, a storage medium 702 such as a memory, an input interface 703, and an output interface 704, as illustrated in Figs. 6 and 7. The control device 700 performs various controls by causing the CPU 701 to execute a program stored in the storage medium 702. Additionally, the control device 700 receives a signal from the outside with the input interface 703 and transmits the signal to the outside with the output interface 704.

The control device 700 repeatedly manufactures a molded product by repeatedly performing the mold closing step, the mold clamping step, the mold opening step, and the like. Additionally, the control device 700 performs the plasticizing step, the filling step, the holding pressure step, and the like during the mold clamping step. A series of operations for obtaining a molded product, for example, the operation from the start of the plasticizing step to the start of the next plasticizing step are also referred to as "shot" or "molding cycle". Additionally, the time required for one shot is also referred to as "molding cycle time".

A single molding cycle includes, for example, the plasticizing step, the mold closing step, the mold clamping step, the filling step, the holding pressure step, the cooling step, the mold opening step, and the ejection step in this order. The order herein is the order of starting the respective steps. The filling step, the holding pressure step, and the cooling step are performed between the start of the mold clamping step and the end of the mold clamping step. The end of the mold clamping step coincides with the start of the mold opening step. In addition, in order to shorten the molding cycle time, a plurality of steps may be performed at the same time. For example, the plasticizing step may be performed during the cooling step of the previous molding cycle. In this case, the mold closing step may be performed at the beginning of the molding cycle. Additionally, the filling step may be started during the mold closing step. Additionally, the ejection step may be started during the mold opening step.
In a case where an opening and closing valve that opens and closes the flow path of the nozzle 320 is provided, the mold opening step may be started during the plasticizing step. This is because, even when the mold opening step is started during the plasticizing step, the molding material does not leak from the nozzle 320 when the opening and closing valve closes the flow path of the nozzle 320.

The control device 700 is connected to an operation device 750 and a display device 760.
The operation device 750 receives an input operation by a user and outputs a signal according to the input operation to the control device 700. The display device 760 displays an operation screen according to the input operation in the operation device 750 under the control of the control device 700.

The operation screen is used for setting the injection molding machine 10. A plurality of the operation screens are prepared and can be switched and displayed or displayed in an overlapping manner. The user performs setting or the like of the injection molding machine 10 (including inputting a set value) by operating the operation device 750 while looking at an operation screen displayed on the display device 760.

The operation device 750 and the display device 760 may be constituted of, for example, a touch panel and may be integrated. In addition, the operation device 750 and the display device 760 of the present embodiment are integrated but may be independently provided. Additionally, a plurality of the operation devices 750 may be provided.

### (Gas vent clogging detection device)

The injection molding system of the present embodiment can have the already-described gas vent clogging detection device 50.

Since the details of the gas vent clogging detection device 50 have been already described, the description thereof will be omitted herein.

In the injection molding system of the present embodiment, the resin decomposition gas concentration detection sensor 501 of the gas vent clogging detection device 50 is disposed so as to face the opening, that is, the outlet of the gas vent 802 located on the outer surface of the mold device 800. By adopting this disposition, the concentration of the resin decomposition gas exhausted from the gas vent can be accurately measured.

In addition, a pipe may be connected to the gas vent 802 and connect the resin decomposition gas concentration detection sensor 501 and the gas vent 802 via the pipe. However, when the mold device 800 is opened, for example, the position of the movable mold 820 moves in the left direction in the drawing. Therefore, there is a case where it may be difficult to connect the gas vent 802 and the pipe to each other. For this reason, by disposing the opening provided on the outer surface of the mold device 800 of the gas vent 802 and the detection unit of the resin decomposition gas concentration detection sensor 501 so as to face each other as described above, it is possible to adopt such a configuration that the detection of the resin decomposition gas concentration is performed.

Additionally, in a case where a slit is formed in the surface 830A (see Fig. 2) of the movable member 830 facing the cavity space and the movable member 830 has a hollow structure to form a gas vent, the resin decomposition gas concentration detection sensor can be disposed in the movable member.

The resin decomposition gas concentration detection sensor 501 may be disposed so as to face the outlet of any gas vent provided in the mold device 800. For this reason, Figs. 6 and 7 illustrate an example in which the resin decomposition gas concentration detection sensor 501 is disposed so as to face the outlet of the gas vent 802A provided so as to communicate with the upper surface of the mold device 800. However, the present invention is limited to this form. For example, in Figs . 6 and 7, the resin decomposition gas concentration detection sensor may be disposed so as to face the outlet of the gas vent 802B provided so as to communicate with the lower surface of the mold device 800.

The resin decomposition gas concentration detection sensor 501 is preferably fixed to any of the stationary platen 110, the movable platen 120, and the frame 900 of the injection molding machine 10. Additionally, the resin decomposition gas concentration detection sensor 501 may be disposed in the movable member 830.

In addition, in a case where the resin decomposition gas concentration detection sensor 501 is disposed below the mold device 800, it is preferable to fix the resin decomposition gas concentration detection sensor 501 to, for example, the stationary platen 110 so as not to come into contact with a molded product falling downward when the mold device 800 is opened and the molded product is taken out.

Although the method of fixing the resin decomposition gas concentration detection sensor 501 is not particularly limited, the resin decomposition gas concentration detection sensor 501 may be fixed to the injection molding machine 10 via an arm portion 71, for example, as illustrated in Figs. 6 and 7.

The determination unit 502 is connected to the resin decomposition gas concentration detection sensor 501, which can detect the clogging of the gas vent 802 on the basis of the concentration of the resin decomposition gas that is exhausted from the gas vent 802 of the mold device 800 and detected by the resin decomposition gas concentration detection sensor 501.

In addition, the determination unit 502 may be incorporated in the control device 700 of the injection molding machine 10 and may be configured not to be separately provided. That is, the control device 700 may carry out the function of the determination unit 502.

Additionally, the injection molding system of the present embodiment may be configured to include the already-described mold system and the injection molding machine. For this reason, the injection molding system 60 of the present embodiment may further include the mold device 800.

According to the injection molding system of the present embodiment described above, the already-described gas vent clogging detection device is included. For this reason, the clogging of the gas vent of the mold device can be easily detected, and the yield of the molded product using the injection molding system can be increased.

### Reference Signs List

800: mold device
801: cavity space
802, 802A, 802B: gas vent
11: mold system
50: gas vent clogging detection device
501: resin decomposition gas concentration detection sensor
502: determination unit
10: injection molding machine
60: injection molding system
S1: resin decomposition gas concentration detection step
S2: determination step

## Claims

1. A gas vent clogging detection device comprising:
a resin decomposition gas concentration detection sensor configured to detect concentration of a resin decomposition gas of a resin supplied to a cavity space of a mold device, the resin decomposition gas being exhausted from a gas vent of the mold device; and
a determination unit configured to determine whether or not the gas vent of the mold device is clogged on the basis of the resin decomposition gas concentration detected by the resin decomposition gas concentration detection sensor.

2. A mold system comprising:
the gas vent clogging detection device according to claim 1; and
a mold device.

3. An injection molding system comprising:
the gas vent clogging detection device according to claim 1; and
an injection molding machine.

4. A gas vent clogging detection method comprising:
a resin decomposition gas concentration detection step of detecting concentration of a resin decomposition gas of a resin supplied to a cavity space of a mold device, the resin decomposition gas being exhausted from a gas vent of the mold device; and
a determination step of determining whether or not the gas vent of the mold device is clogged on the basis of the resin decomposition gas concentration detected in the resin decomposition gas concentration detection step.

## Patentansprüche

1. Vorrichtung zur Detektion eines verstopften Gasabzugs, umfassend:
einen Sensor zur Detektion einer Harzzersetzungsgaskonzentration, der konfiguriert ist, Konzentration eines Harzzersetzungsgases eines Harzes zu detektieren, welches einem Kavitätsraum einer Formvorrichtung zugeführt wird, wobei das Harzzersetzungsgas aus einem Gasabzug der Formvorrichtung ausgeleitet wird; und
eine Bestimmungseinheit, die konfiguriert ist, auf der Grundlage der Harzzersetzungsgaskonzentration, welche durch den Sensor zur Detektion einer Harzzersetzungsgaskonzentration detektiert wird, zu bestimmen, ob der Gasabzug der Formvorrichtung verstopft ist oder nicht.

2. Formsystem, umfassend:
die Vorrichtung zur Detektion eines verstopften Gasabzugs nach Anspruch 1; und
eine Formvorrichtung.

3. Spritzgießsystem, umfassend:
die Vorrichtung zur Detektion eines verstopften Gasabzugs nach Anspruch 1; und
eine Spritzgießmaschine.

4. Verfahren zur Detektion eines verstopften Gasabzugs, umfassend:
einen Schritt der Detektion einer Harzzersetzungsgaskonzentration des Detektierens einer Konzentration eines Harzzersetzungsgases eines Harzes, das einem Kavitätsraum einer Formvorrichtung zugeführt wird, wobei das Harzzersetzungsgas aus einem Gasabzug der Formvorrichtung ausgeleitet wird; und
einen Bestimmungsschritt des Bestimmens, ob der Gasabzug der Formvorrichtung verstopft ist oder nicht, auf der Grundlage der Harzzersetzungsgaskonzentration, die in dem Schritt der Detektion der Harzzersetzungsgaskonzentration detektiert wird.

## Revendications

1. Un dispositif de détection d'obstruction d'évent de gaz comprenant :
un capteur de détection de concentration de gaz de décomposition de résine configuré de manière à détecter une concentration d'un gaz de décomposition de résine d'une résine fournie à un espace de cavité d'un dispositif de moule, le gaz de décomposition de résine étant évacué à partir d'un évent de gaz du dispositif de moule ; et
une unité de détermination configurée de manière à déterminer si l'évent de gaz du dispositif de moule est obstrué ou non, sur la base de la concentration de gaz de décomposition de résine détectée par le capteur de détection de concentration de gaz de décomposition de résine.

2. Un système de moule comprenant :
le dispositif de détection d'obstruction d'évent de gaz selon la revendication 1 ; et
un dispositif de moule.

3. Un système de moulage par injection comprenant :
le dispositif de détection d'obstruction d'évent de gaz selon la revendication 1 ; et
une machine de moulage par injection.

4. Une méthode de détection d'obstruction d'évent de gaz comprenant :
une étape de détection de concentration de gaz de décomposition de résine consistant à détecter une concentration d'un gaz de décomposition de résine d'une résine fournie à un espace de cavité d'un dispositif de moule, le gaz de décomposition de résine étant évacué à partir d'un évent de gaz du dispositif de moule ; et
une étape de détermination consistant à déterminer si l'évent de gaz du dispositif de moule est obstrué ou non, sur la base de la concentration de gaz de décomposition de résine détectée à l'étape de détection de concentration de gaz de décomposition de résine.
